# EUROPEAN PATENT SPECIFICATION

(11) **EP 1 710 956 B1**
(45) Date of publication and mention of the grant of the patent: **04.06.2008**
(21) Application number: 05102623.5
(22) Date of filing: 04.04.2005
(51) Int. Cl.: H04L 12/24, H04L 29/06

(54) **Policy Proxy**
Regelproxy
Proxy de règles

(43) Date of publication of application: 11.10.2006
(73) Proprietor: Research In Motion Limited, Waterloo, Ontario N2L 3W8 (CA)
(72) Inventor: Brown, Michael K, N2M 2Z2, Kitchener (CA); Adams, Neil, N2K 4E4, Waterloo (CA); Little, Herb, N2T 2V8, Waterloo (CA)
(74) Representative: Rickard, David John

(56) References cited:
- WO-A-03/028313
- US-A1- 2002 165 006
- FEBRUARY 1999 SILVANO GAI JOHN STRASSNER CISCO SYSTEMS DAVID DURHAM INTEL SHAI HERZOG IPHIGHWAY HUGH MAHON HP FRANCIS REICHMEYER N: "QoS Policy Framework Architecture" IETF STANDARD-WORKING-DRAFT, INTERNET ENGINEERING TASK FORCE, IETF, CH, 10 February 1999 (1999-02-10), XP015035137 ISSN: 0000-0004
- PHANSE K S ET AL: "Design and demonstration of policy-based management in a multi-hop ad hoc network" AD HOC NETWORKS, ELSEVIER, vol. 3, no. 3, 29 November 2003 (2003-11-29), pages 389-401, XP004848804 ISSN: 1570-8705
- CHAN K. ET AL: 'COPS Usage for Policy Provisioning (COPS-PR)' IETF RFC 3084 March 2001, pages 1 - 34, XP015008867

## Description

In an organization, an Information Technology (IT) administrator may create IT policies to control the electronic devices in the organization, such as computers, laptops, cellphone, personal digital assistants, printers, and the like. A policy server may store the various IT policies, and may push the relevant IT policy directly to the devices in the organization. Alternatively, the devices may contact the policy server directly to obtain their IT policy.

The organization may include electronic devices that are unable to connect to the policy server. The IT administrator may manually configure each such electronic device according to the established IT policy. However, this is time-consuming and may lead to errors if the manual configuration does not match the intended policy. Moreover, some electronic devices may not include a user interface that is suitable for enabling configuration according to an IT policy.

The IT administrator may also develop IT policies for electronic devices that do not belong to the organization but that communicate with a device that does belong to the organization, or have installed thereon software for use with devices that belong to the organization. Since these devices do not belong to the organization, they may be unable to , connect to the policy server and the IT administrator may not have any physical access to them.

WO03/02831 discloses an access point in a wireless network that acts as a passive connectivity device that receives and transmits communications initiated by other devices. It does not make requests of a policy server on behalf of other devices. Similarly, other publications such as US2002/165006, IETF Standard Working Draft, "QoS Policy Framework Architecture", 10^{th} February 1999 and "Design and Demonstration of Policy Based Management in a Multi-Hop Ad Hoc Network", Ad Hoc Networks, vol. 3, no. 3. 29th November 2003, pages 389 - 401 disclose that intermediate devices (including a policy proxy or policy server) only play a passive role, and do not make requests for policies for devices that are not policy-capable.

The article "Design and demonstration of policy-based management in a multi-hop ad hoc network" by Phanse et al., AD HOC NETWORKS, ELSEVIER, vol. 3, no. 3, pages 389-401 (29 November 2003) describes a policy-based framework for the management of wireless ad hoc networks. When a visiting client establishes a COPS connection with a policy server in a foreign domain, the server searches for policies for that client. If it does not find any relevant policies in its Policy Information Base, it gathers the address of the client's home domain policy server from the "Home PDP Address" object. The foreign policy server then acts as a client (with a new "COPS Negotiation" client-type) and establishes a COPS connection with the client's home domain policy server. It sends a COPS request message to the client's home domain policy server to download policies relevant to the visiting client. The foreign policy server then adapts its policies to reflect the service level agreement between the domains.

### GENERAL

In a main aspect, the present invention provides a system comprising: a policy server; a first device able to communicate with said policy server; one or more other devices able to communicate with said first device and unable to communicate with said policy server, wherein said first device is arranged to collect information regarding those of said other devices with which said first device is communicating, to report said information to said policy server, to contact said policy server to request a policy for one of said other devices, to receive from said policy server a policy for said one of said other devices, and to send all or a portion of said policy to said one of said other devices.

Furthermore, the present invention provides a first device as described in claim 8. a method in a first device as described in claim 12, a machine readable medium as described in claim 15 and a communication system as described in claim 16.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a schematic diagram of an exemplary system, according to some embodiments of the invention;

Figure 2 is a block diagram of some component of the exemplary system of figure 1, according to some embodiments of the invention; and

Figure 3 a flowchart of an exemplary method, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

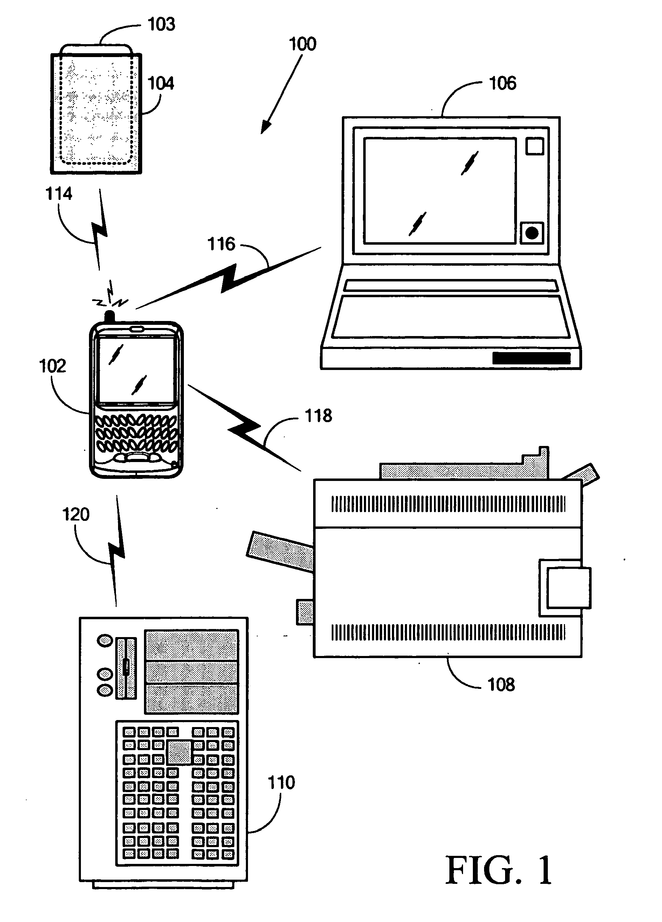

Figure 1 is a schematic diagram of an exemplary system, according to some embodiments of the invention. A system 100 includes a device 102 and a policy server 110. An IT administrator may store one or more policies on policy server 110. One or more of the policies stored on policy server 110 may apply to device 102, and policy server 110 may push the one or more policies that apply to device 102 over a communication link 120. Device 102 may contact policy server 110 over communication link 120 to request the one or more policies that apply to device 102.

System 100 may also include other devices for which the IT administrator has stored policies on policy server 110. For example, these other devices may include a smart card reader 104, a personal computer 106, and a printer 108, which may be able to communicate with device 102 over communication links 114, 116 and 118, respectively. A smart card 103 is shown inserted into smart card reader 104. Smart card reader 104 and printer 108 may be considered peripherals of device 102, and one or more software applications for use with device 102 may be installed on personal computer 106.

Device 102 may be a mobile device, and communication link 120 may include a segment that is a wireless communication link. For example, communication link 120 may include a cellular telephony link. A non-exhaustive list of examples of cellular telephony standards for the cellular telephony link includes Direct Sequence - Code Division Multiple Access (DS-CDMA), Global System for Mobile Communications (GSM), North American Digital Cellular (NADC), Time Division Multiple Access (TDMA), Extended-TDMA (E-TDMA), wideband CDMA (WCDMA), General Packet Radio Service (GPRS), Enhanced Data for GSM Evolution (EDGE), 3.5G and 4G. In another example, communication link 120 may include a wireless local area network link. A non-exhaustive list of examples of wireless local area network standards for the wireless local area network link includes the Institute of Electrical and Electronic Engineers (IEEE) for Wireless LAN MAC and Physical layer (PHY) 802.11 a, b, g and n specifications or future related standards, the Bluetooth® standard, the Zigbee^{™} standard and the like.

Smart cards are personalized security devices, defined by the IS07816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device.

The person whose security information is stored on smart card 103 may use smart card reader 104 for identification and to digitally sign and/or decrypt messages sent by device 102. Smart card reader 104 may communicate with device 102 over a wireless communication link 114, for example, a Bluetooth® communication link.

A non-exhaustive list of examples of what an IT policy for smart card reader 104 may include is a) under what circumstances confidential information stored at smart card reader 104 is deleted, b) with which devices smart card reader 104 is allowed to communicate, c) the number of incorrect smart card login attempts before smart card reader 104 is locked, and d) which algorithms smart card reader 104 is allowed to use to protect wireless communication link 114. However, smart card reader 104 may lack a user interface that is suitable for configuring this policy in smart card reader 104. Also, smart card reader 104 may be unable to communicate with policy server 110. Policy server 110 may communicate a policy for smart card reader 104 to device 102, and device 102 may communicate the policy to smart card reader 104.

Printer 108 may be a local printer that communicates with device 102 over wireless communication link 118, for example, a Bluetooth® communication link. A non-exhaustive list of examples of what an IT policy for printer 108 may include is a)font or template information on how to print out forms of the organization, b) printer resolution (e.g., dots per inch), and c) which devices printer 108 is allowed to connect to. Printer 108 may be unable to communicate with policy server 110. Policy server 110 may communicate a policy for printer 108 to device 102, and device 102 may communicate the policy to printer 108.

Personal computer 106 may be a home computer of a person who belongs to the organization, and may have a software application installed thereon for use with device 102. An IT policy for personal computer 106 may, for example, affect how the software application operates. Policy server 110 may communicate a policy for personal computer 106 to device 102, and device 102 may communicate the policy to personal computer 106.

In general, policy server 110 may communicate to device 102 a policy for another device that is able to communicate with device 102 and unable to communicate with policy server 110, and device 102 may communicate the policy to the other device. Device 102 may contact policy server 110 over communication link 120 to request one or more policies for the other device. Device 102 may collect information regarding which other devices it is communicating with and may report that information to policy server 110. Device 102 may also send a confirmation back to policy server 110 once a policy received at device 102 and communicated to another device is applied at the other device.

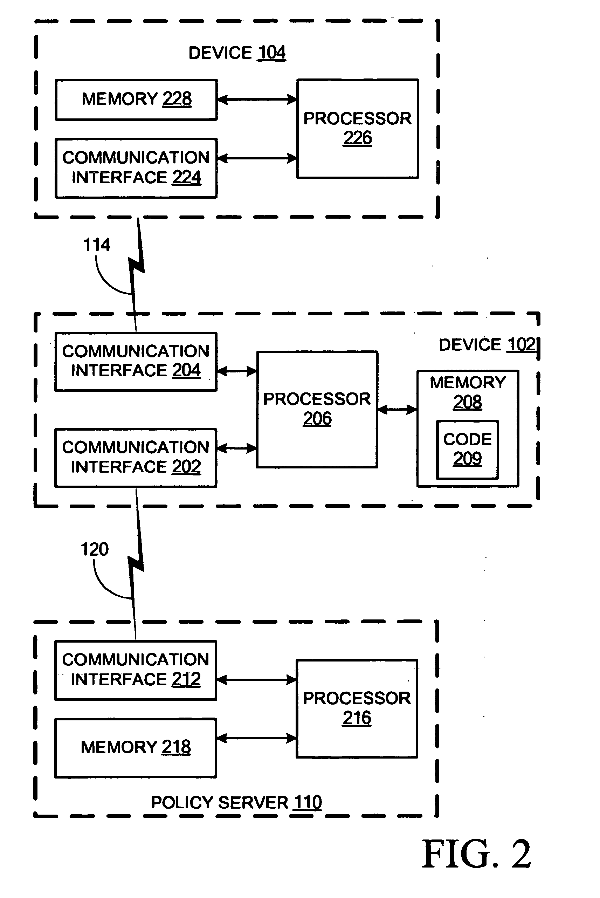

Figure 2 is an exemplary block diagram of policy server 110, device 102 and device 104, according to some embodiments of the invention.

Device 102 may include a communication interface 202 through which device 102 is able to receive a policy from policy server 110. Device 102 may also include a communication interface 204 through which device 102 is able to transmit all or a portion of the policy to device 104. Communication interface 202 may be compatible, for example, with a wireless local area network standard or with a cellular telephony standard. Communication interface 204 may be compatible, for example, with the Bluetooth® standard.

Device 102 may also include a processor 206 coupled to communication interface 202 and to communication interface 204. Device 102 may also include a memory 208, coupled to processor 206. Memory 208 may store executable code 209 to be executed by processor 206. Memory 208 is able to store one or more policies received from policy server 110.

Policy server 110 may include a communication interface 212, a processor 216 coupled to communication interface 212, and a memory 218 coupled to processor 216. Memory 218 is able to store IT policies.

Device 104 may include a communication interface 224, a processor 226 coupled to communication interface 224, and a memory 228 coupled to processor 226. Memory 228 is able to store one or more policies received from device 102. Communication interface 224 may be compatible with the same standard as communication interface 204.

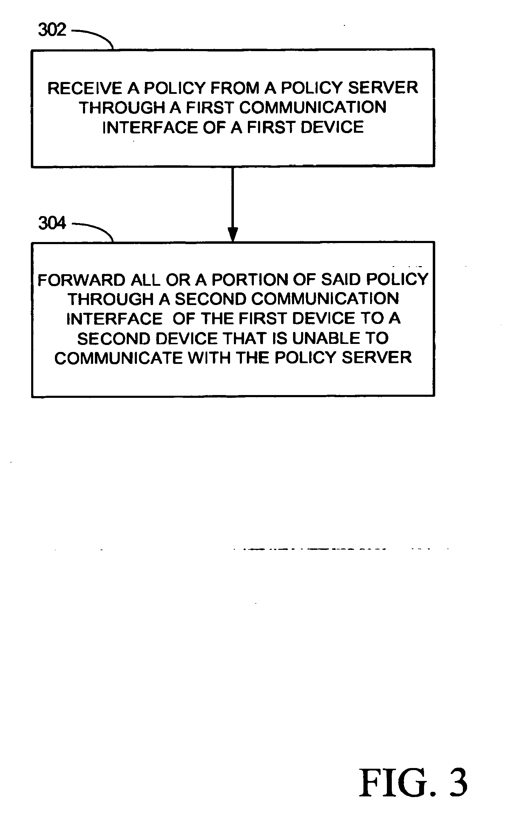

Figure 3 is a flowchart of an exemplary method to be implemented by device 102, according to some embodiments of the invention. Executable code 209, when executed by processor 210, may cause device 102 to implement the method of figure 3.

At 302, device 102 receives a policy from policy server 110 through communication interface 202 over communication link 120. At 304, device 102 transmits all or a portion of the policy through communication interface 204 to another device that is unable to communicate with policy server 110.

A non-exhaustive list of examples for device 102 includes a cellular phone, a personal digital assistant (PDA), an electronic mail (Email) client, a gaming device, a laptop computer, a notebook computer, a desktop computer, a server computer, and any other suitable apparatus.

A non-exhaustive list of examples for processors 206, 216 and 226 includes a central processing unit (CPU), a digital signal processor (DSP), a reduced instruction set computer (RISC), a complex instruction set computer (CISC) and the like.

Memories 208, 218 and 228 may be fixed in or removable from device 102, policy server 110 and device 104, respectively. A non-exhaustive list of examples for memories 208, 218 and 228 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Processors 206, 216 and 226, and memories 208, 218 and 228 are functional blocks and may be implemented in any physical way in device 102, policy server 110 and device 104, respectively. For example, processor 206 and memory 208 may each be implemented in a separate integrated circuit, and optionally in additional discrete components. Alternatively, some of the functional blocks may be grouped in one integrated circuit. Furthermore, the functional blocks may be parts of application specific integrated circuits (ASIC), field programmable gate arrays (FPGA) or application specific standard products (ASSP).

## Claims

1. A system (100) comprising:
a policy server (110);
a first device (102) able to communicate with said policy server (110);
one or more other devices (104, 106, 108) able to communicate with said first device (102) and unable to communicate with said policy server (110),
wherein said first device (102) is arranged to collect information regarding those of said other devices (104, 106, 108) with which said first device (102) is communicating, to report said information to said policy server (110), to contact said policy server (110)to request a policy for one of said other devices (104, 106, 108), to receive from said policy server (110) a policy for said one of said other devices (104, 106, 108), and to send all or a portion of said policy to said one of said other devices (104, 106, 108).

2. The system (100) of claim 1, wherein said one of said other devices is a smart card reader (104) or a printer (108), and/or wherein said one of said other devices (106) has installed thereon a software application for use with said first device (102), and said policy affects how said software application operates.

3. The system (100) of claim 1, wherein said one of said other devices is a smart card reader (104) and said policy comprises:
under what circumstances confidential information stored at said smart card reader (104) is deleted; and/or
with which devices said smart card reader (104) is allowed to communicate; and/or
a number of incorrect smart card login attempts before said smart card reader (104) is locked; and/or
which algorithms smart card reader (104) is allowed to use to protect a communication link with said first device (102).

4. The system (100) of any one of claims 1 to 3, wherein said first device (102) is a mobile device and said one of said other devices (104, 106, 108) is able to communicate with said mobile device (102) over a wireless communication link (114, 116, 118).

5. The system (100) of claim 4, wherein said wireless communication link (114, 116, 118) is a Bluetooth® communication link.

6. The system (100) of any one of claims 1 to 5, wherein said first device (102) is a mobile device and said first device (102) is able to communicate with said policy server (110) over a communication link (120) at least a segment of which is a wireless communication link.

7. The system (100) of claim 6, wherein said wireless communication link is a cellular telephony link or a wireless local area network link.

8. A first device (102) comprising:
a processor (206);
a first communication interface (202) coupled to said processor (206) and through which said first device (102) is able to communicate with a policy server (110); and
a second communication interface (204) coupled to said processor (206) through which said first device (102) is able to communicate with other devices (104, 106, 108) that are unable to communicate with said policy server (110),
wherein said first device (102) is arranged to collect information regarding those of said other devices (104, 106, 108) with which said first device (102) is communicating, to report said information to said policy server (110), to contact said policy server (110) to request a policy for one of said other devices (104, 106, 108) to receive from said policy server (110) a policy for said one of said other devices (104, 106, 108) and to send all or a portion of said policy to said one of said other devices (104, 106, 108).

9. The first device (102) of claim 8, wherein said first communication interface (202) is compatible with a first wireless communication standard and said second communication interface (204) is compatible with a second, different wireless communication standard.

10. The first device (102) of claim 9, wherein said first communication standard is a wireless local area network standard or a cellular telephony standard.

11. The first device (102) of claim 9 or claim 10, wherein said second communication standard is the Bluetooth® standard.

12. A method in a first device (102), the method comprising:
collecting information regarding other devices (104, 106, 108) with which said first device (102) is communicating and which are unable to communicate with a policy server;
reporting said information to said policy server (110);
contacting said policy server (110) to request a policy for one of said other devices (104, 106, 108);
receiving from said policy server said policy at said first device (102); and
transmitting all or a portion of said policy from said first device (102) to said one of said other devices (104, 106, 108).

13. The method of claim 12, wherein receiving said policy at said first device (102) comprises at least:
receiving said policy from said policy server (110) over a communication link (120) at least a segment of which is a wireless communication link,
and/or
receiving said policy at a communication interface (202) of said first device (102) that is compatible with a cellular telephony standard or a wireless local area network standard.

14. The method of claim 12 or claim 13, wherein transmitting all or a portion of said policy comprises at least:
transmitting all or a portion of said policy from a communication interface (204) of said first device (102) that is compatible with the Bluetooth® standard.

15. A machine readable medium (208) comprising executable code means (209) which, when executed in a processor (206) of the device (102) of any one of claims 8 to 11, causes said device (102) to implement the steps of the method of any one of claims 12 to 14.

## Patentansprüche

1. System (100), das Folgendes umfasst:
einen Regelserver (110),
ein erstes Gerät (102), das mit dem Regelserver (110) kommunizieren kann;
ein oder mehr andere Geräte (104, 106, 108), die mit dem ersten Gerät (102) kommunizieren können und mit dem Regelserver (110) nicht kommunizieren können,
wobei das erste Gerät (102) angeordnet ist, um Informationen in Bezug auf diejenigen der anderen Geräte (104, 106, 108) zu erfassen, mit denen das erste Gerät (102) kommuniziert, um die Informationen dem Regelserver (110) zu melden, um den Regelserver (110) zu kontaktieren, um eine Regel für eines der anderen Geräte (104, 106, 108) anzufordern, um von dem Regelserver (110) eine Regel für das eine der anderen Geräte (104, 106, 108) zu empfangen und um die gesamte oder einen Teil der Regel an das eine der anderen Geräte (104, 106, 108) zu senden.

2. System (100) nach Anspruch 1, wobei das eine der anderen Geräte ein Chipkartenleser (104) oder ein Drucker (108) ist und/oder wobei auf dem einen der anderen Geräte (106) eine Softwareanwendung zur Nutzung mit dem ersten Gerät (102) installiert ist und die Regel sich darauf auswirkt, wie die Softwareanwendung arbeitet.

3. System (100) nach Anspruch 1, wobei das eine der anderen Geräte ein Chipkartenleser (104) ist und die Regel Folgendes umfasst:
unter welchen Umständen beim Chipkartenleser (104) gespeicherte vertrauliche Informationen gelöscht werden; und/oder
mit welchen Geräten der Chipkartenleser (104) kommunizieren darf; und/oder
eine Reihe fehlerhafter Chipkartenanmeldeversuche, bevor der Chipkartenleser (104) gesperrt wird; und/oder
welche Algorithmen der Chipkartenleser (104) nutzen darf, um eine Kommunikationsverbindung zu dem ersten Gerät (102) zu schützen.

4. System (100) nach einem der Ansprüche 1 bis 3, wobei das erste Gerät (102) ein mobiles Gerät ist und das eine der anderen Geräte (104, 106, 108) mit dem mobilen Gerät (102) über eine drahtlose Kommunikationsverbindung (114, 116, 118) kommunizieren kann.

5. System (100) nach Anspruch 4, wobei die drahtlose Kommunikationsverbindung (114, 116, 118) eine Bluetooth®-Kommunikationsverbindung ist.

6. System (100) nach einem der Ansprüche 1 bis 5, wobei das erste Gerät (102) ein mobiles Gerät ist und das erste Gerät (102) mit dem Regelserver (110) über eine Kommunikationsverbindung (120) kommunizieren kann, von der mindestens ein Segment eine drahtlose Kommunikationsverbindung ist.

7. System (100) nach Anspruch 6, wobei die drahtlose Kommunikationsverbindung eine Zellulartelefonieverbindung oder eine Verbindung eines drahtlosen lokalen Netzwerks ist.

8. Erstes Gerät (102), das Folgendes umfasst:
einen Prozessor (206);
eine erste Kommunikationsschnittstelle (202), die an den Prozessor (206) angeschlossen ist und durch die das erste Gerät (102) mit einem Regelserver (110) kommunizieren kann; und
eine zweite Kommunikationsschnittstelle (204), die an den Prozessor (206) angeschlossen ist, durch die das erste Gerät (102) mit den anderen Geräten (104, 106, 108) kommunizieren kann, die mit dem Regelserver (110) nicht kommunizieren können,
wobei das erste Gerät (102) angeordnet ist, Informationen in Bezug auf diejenigen der anderen Geräte (104,106, 108) zu erfassen, mit denen das erste Gerät (102) kommuniziert, um die Informationen dem Regelserver (110) zu melden, um den Regelserver (110) zu kontaktieren, um eine Regel für eines der anderen Geräte (104, 106, 108) anzufordern, um von dem Regelserver (110) eine Regel für das eine der anderen Geräte (104, 106, 108) zu empfangen und um die gesamte oder einen Teil der Regel an das eine der anderen Geräte (104, 106, 108) zu senden.

9. Erstes Gerät (102) nach Anspruch 8, wobei die erste Kommunikationsschnittstelle (202) mit einem ersten drahtlosen Kommunikationsstandard kompatibel ist und die zweite Kommunikationsschnittstelle (204) mit einem zweiten, anderen drahtlosen Kommunikationsstandard kompatibel ist.

10. Erstes Gerät (102) nach Anspruch 9, wobei der erste Kommunikationsstandard ein Standard eines drahtlosen lokalen Netzwerks oder ein Zellulartelefoniestandard ist.

11. Erstes Gerät (102) nach Anspruch 9 oder Anspruch 10, wobei der zweite Kommunikationsstandard der Bluetooth®-Standard ist.

12. Verfahren in einem ersten Gerät (102), wobei das Verfahren Folgendes umfasst:
Erfassen von Informationen bezüglich anderer Geräte (104, 106, 108), mit denen das erste Gerät (102) kommuniziert und die nicht mit einem Regelserver kommunizieren können,
Melden der Informationen an den Regelserver (110);
Kontaktieren des Regelservers (110), um für eines der anderen Geräte (104, 106, 108) eine Regel anzufordern;
Empfangen der Regel vom Regelserver am ersten Gerät (102); und
Übermitteln der gesamten oder eines Teils der Regel vom ersten Gerät (102) an das eine der anderen Geräte (104, 106, 108).

13. Verfahren nach Anspruch 12, wobei das Empfangen der Regel am ersten Gerät (102) mindestens Folgendes umfasst:
Empfangen der Regel vom Regelserver (110) über eine Kommunikationsverbindung (120), von der mindestens ein Segment eine drahtlose Kommunikationsverbindung ist,
und/oder
Empfangen der Regel an einer Kommunikationsschnittstelle (202) des ersten Geräts (102), die mit einem Zellulartelefoniestandard oder einem Standard eines drahtlosen lokalen Netzwerks kompatibel ist.

14. Verfahren nach Anspruch 12 oder Anspruch 13, wobei das Übermitteln der gesamten oder eines Teils der Regel mindestens Folgendes umfasst:
Übermitteln der gesamten oder eines Teils der Regel von einer Kommunikationsschnittstelle (204) des ersten Geräts (102), die mit dem Bluetooth®-Standard kompatibel ist.

15. Maschinenlesbares Medium (208), das ein ausführbares Codemittel (209) umfasst, welches bei der Ausführung in einem Prozessor (206) des Geräts (102) nach einem der Ansprüche 8 bis 11 verursacht, dass das Gerät (102) die Schritte des Verfahrens nach einem der Ansprüche 12 bis 14 implementiert.

## Revendications

1. Système (100) comprenant :
un serveur de règles (110) ;
un premier dispositif (102) capable de communiquer avec ledit serveur de règles (110);
un ou plusieurs autres dispositifs (104, 106, 108) capables de communiquer avec ledit premier dispositif (102) et incapables de communiquer avec ledit serveur de règles (110),
dans lequel ledit premier dispositif (102) est agencé pour recueillir des informations concernant ceux parmi lesdits autres dispositifs (104, 106, 108) avec lesquels ledit premier dispositif (102) communique, pour rendre compte desdites informations au dit serveur de règles (110), pour contacter ledit serveur de règles (110) pour demander une règle pour un desdits autres dispositifs (104, 106, 108), pour recevoir dudit serveur de règles (110) une règle pour ledit un desdits autres dispositifs (104, 106, 108), et pour envoyer toute ou une partie de ladite règle au dit un desdits autres dispositifs (104, 106, 108).

2. Système (100) selon la revendication 1, dans lequel ledit un desdits autres dispositifs est un lecteur de carte à puce (104) ou une imprimante (108), et/ou dans lequel une application logicielle à utiliser avec ledit premier dispositif (102) est installée sur ledit un desdits autres dispositifs (106), et ladite règle affecte comment ladite application logicielle fonctionne.

3. Système (100) selon la revendication 1, dans lequel ledit un desdits autres dispositifs est un lecteur de carte à puce (104) et ladite règle comprend :
dans quelles circonstances des informations confidentielles mémorisées au niveau dudit lecteur de carte à puce (104) sont supprimées ; et/ou
avec quels dispositifs ledit lecteur de carte à puce (104) est autorisé à communiquer ; et/ou
un nombre de tentatives d'ouvertures de session de carte à puce incorrectes avant que ledit lecteur de carte à puce (104) soit verrouillé ; et/ou
quels algorithmes le lecteur de carte à puce (104) est autorisé à utiliser pour protéger une ligne de communication avec ledit premier dispositif (102).

4. Système (100) selon l'une quelconque des revendications 1 à 3, dans lequel ledit premier dispositif (102) est un dispositif mobile et ledit un desdits autres dispositifs (104, 106, 108) est capable de communiquer avec ledit dispositif mobile (102) sur une ligne de communication sans fil (114, 116, 118).

5. Système (100) selon la revendication 4, dans lequel ladite ligne de communication sans fil (114, 116, 118) est une ligne de communication Bluetooth®.

6. Système (100) selon l'une quelconque des revendications 1 à 5, dans lequel ledit premier dispositif (102) est un dispositif mobile et ledit premier dispositif (102) est capable de communiquer avec ledit serveur de règles (110) sur une ligne de communication (120) dont au moins un segment est une ligne de communication sans fil.

7. Système (100) selon la revendication 6, dans lequel ladite ligne de communication sans fil est une ligne de téléphonie cellulaire ou une ligne de réseau local sans fil.

8. Premier dispositif (102) comprenant :
un processeur (206) ;
une première interface de communication (202) couplée au dit processeur (206) et via laquelle ledit premier dispositif (102) est capable de communiquer avec un serveur de règles (110) ; et
une deuxième interface de communication (204) couplée au dit processeur (206) via lequel ledit premier dispositif (102) est capable de communiquer avec d'autres dispositifs (104, 106, 108) qui sont incapables de communiquer avec ledit serveur de règles (110),
dans lequel ledit premier dispositif (102) est agencé pour recueillir des informations concernant ceux parmi lesdits autres dispositifs (104, 106, 108) avec lesquels ledit premier dispositif (102) communique, pour rendre compte desdites informations au dit serveur de règles (110), pour contacter ledit serveur de règles (110) pour demander une règle pour un desdits autres dispositifs (104, 106, 108), pour recevoir dudit serveur de règles (110) une règle pour ledit un desdits autres dispositifs (104, 106, 108), et pour envoyer toute ou une partie de ladite règle au dit un desdits autres dispositifs (104, 106, 108).

9. Premier dispositif (102) selon la revendication 8, dans lequel ladite première interface de communication (202) est compatible avec une première norme de communication sans fil et ladite deuxième interface de communication (204) est compatible avec une deuxième norme de communication sans fil différente.

10. Premier dispositif (102) selon la revendication 9, dans lequel ladite première norme de communication est une norme de réseau local sans fil ou une norme de téléphonie cellulaire.

11. Premier dispositif (102) selon la revendication 9 ou la revendication 10, dans lequel ladite deuxième norme de communication est la norme Bluetooth®.

12. Procédé dans un premier dispositif (102), le procédé comprenant les étapes consistant à :
recueillir des informations concernant d'autres dispositifs (104, 106, 108) avec lesquels le premier dispositif (102) communique et qui sont incapables de communiquer avec un serveur de règles ;
rendre compte desdites informations au dit serveur de règles (110) ;
contacter ledit serveur de règles (110) pour demander une règle pour un desdits autres dispositifs (104, 106, 108) ;
recevoir dudit serveur de règles ladite règle au niveau dudit premier dispositif (102) ; et
transmettre toute ou une partie de ladite règle dudit premier dispositif (102) au dit un desdits autres dispositifs (104, 106, 108).

13. Procédé selon la revendication 12, dans lequel l'étape consistant à recevoir ladite règle au niveau dudit premier dispositif (102) comprend au moins les étapes consistant à :
recevoir ladite règle dudit serveur de règles (110) sur une ligne de communication (120) dont au moins un segment est une ligne de communication sans fil,
et/ou
recevoir ladite règle au niveau d'une interface de communication (202) dudit premier dispositif (102) qui est compatible avec une norme de téléphonie cellulaire ou une norme de réseau local sans fil.

14. Procédé selon la revendication 12 ou la revendication 13, dans lequel l'étape consistant à transmettre toute ou une partie de ladite règle comprend au moins l'étape consistant à :
transmettre toute ou une partie de ladite règle d'une interface de communication (204) dudit premier dispositif (102) qui est compatible avec la norme Bluetooth®.

15. Support lisible par une machine (208) comprenant un moyen de code exécutable (209) qui, quand exécuté dans un processeur (206) du dispositif (102) selon l'une quelconque des revendications 8 à 11, provoque la mise en oeuvre par ledit dispositif (102) des étapes du procédé selon l'une quelconque des revendications 12 à 14.
